(19) **Europäisches Patentamt / European Patent Office / Office européen des brevets**

(11) **EP 1 411 652 B1**

(12) **EUROPÄISCHE PATENTSCHRIFT**

(45) Veröffentlichungstag und Bekanntmachung des Hinweises auf die Patenterteilung:
**05.03.2008 Patentblatt 2008/10**

(51) Int Cl.:
**H04B 10/10** *(2006.01)*

(21) Anmeldenummer: **03021587.5**

(22) Anmeldetag: **25.09.2003**

(54) **Verfahren zum Verringern von bei optischer Freiraum-Kommunikation auftretendem Fading**

Method for reducing fading arising in optical free space communication

Méthode de réduction de l'évanouissment apparaissant lors d'une communication optique en espace libre

(84) Benannte Vertragsstaaten:
**AT BE BG CH CY CZ DE DK EE ES FI FR GB GR HU IE IT LI LU MC NL PT RO SE SI SK TR**

(30) Priorität: **14.10.2002 DE 10247882**

(43) Veröffentlichungstag der Anmeldung:
**21.04.2004 Patentblatt 2004/17**

(73) Patentinhaber: **Deutsches Zentrum für Luft- und Raumfahrt e.V.**
**51147 Köln (DE)**

(72) Erfinder:
• **Giggenbach, Dirk**
**80687 München (DE)**
• **Purvinskis, Robert**
**Gelnforrest WA 6017 (AU)**

(74) Vertreter: **von Kirschbaum, Albrecht**
**Patentanwalt**
**Postfach 1520**
**82102 Germering (DE)**

(56) Entgegenhaltungen:
WO-A-01/06663     FR-A- 2 833 786
US-A1- 2002 114 038

## Beschreibung

Die Erfindung betrifft ein Verfahren zum Verringern von bei optischer Freiraum-Kommunikation auf Grund von atmosphärischen Brechungsindex-Turbulenzen auftretendem Fading, wobei sendeseitig mit gleichen Signalen modulierte Träger mindestens zweier unterschiedlicher Wellenlängen in einem Strahlengang kombiniert und gesendet werden und empfangsseitig die auf den verschiedene Trägern übertragenen, ursprünglich gleichen Signale detektiert und ausgewertet werden.

Elektromagnetische Wellen im optischen Bereich werden beim Passieren turbulenter atmosphärischer Regionen aufgrund der zeitlichen und örtlichen Brechungsindexschwankungen der Luft gestört. Hierzu kann man sich die Luft als Ensemble von Zellen mit einem Durchmesser von etwa 1mm bis mehreren Metern Durchmesser mit aufgrund von Temperaturunterschieden unterschiedlichem Brechungsindex vorstellen. Bei einer Freistrahl-Datenübertragungsstrecke ("optischer Richtfunk") führt dies beim Empfänger zu teils extremen Intensitätsschwankungen (sog. "Specklemuster"), wobei sowohl Signaleinbrüche ("Fades") als auch Leistungsüberhöhungen ("Surges") relativ zum Mittelwert auftreten. Die zeitliche Dynamik der Muster entsteht dabei durch konvektive Turbulenz bzw. Windbewegungen der Brechungsindex-Zellen. Die entsprechenden Hell-Dunkel-Muster haben dabei Größenordnungen im Zentimeter- bis Meter-Bereich.

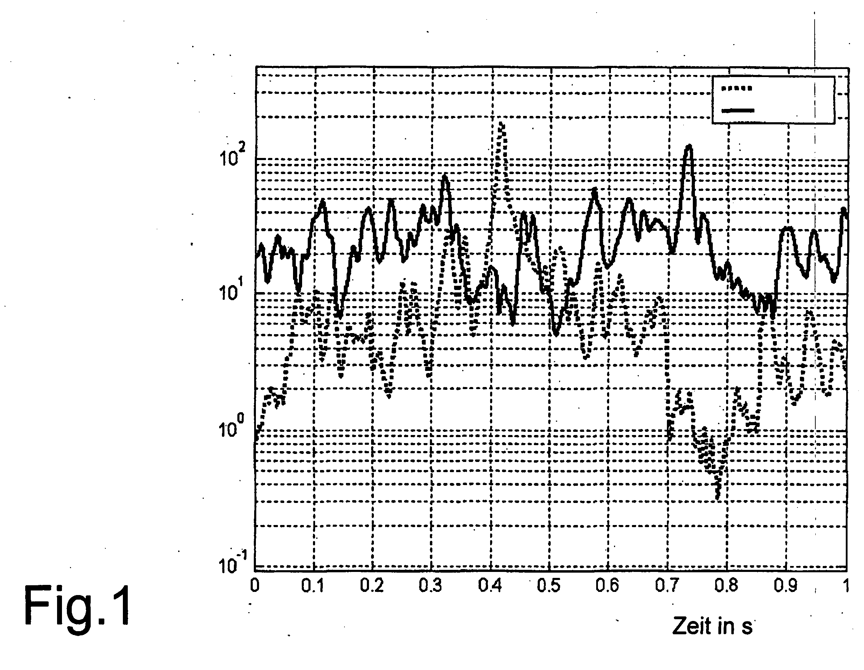

Ein Empfangsteleskop sammelt (integriert) die Intensität über seiner Empfangsapertur, was zu einer leichten Verbesserung der Schwankungen, der sogenannten "Aperturmittelung" führt, da sich kleinere Musterstrukturen teilweise über der Fläche ausgleichen (Siehe D. Giggenbach, F. David, et al: "Measurements at a 61 km near-ground optical transmission channel" Proceedings of SPIE, Vol. 4635, 2002, 9 Stn.) Trotzdem werden noch Empfangsleistungsschwankungen ("Szintillationen") bis über +/-10dB festgestellt (Siehe Fig.1 den gestrichelten Signalverlauf für einen Sender; hierbei sind auf der Abszisse die Zeit in s und auf der Ordinate der Logarithmus der Empfängerleistung in nW aufgetragen). Hierdurch wird die Leistung des Datenübertragungssystem extrem verschlechtert. Der Empfänger wandelt schließlich die optische Leistung in ein elektrisches Signal zur weiteren Verarbeitung und zum Datenempfang.

Die Stärke der Empfangsleistungsschwankungen wird durch den sogenannten PowerScintillation-Index (PSI) bewertet, welcher die Varianz der Empfangsleistung wiedergibt, also mit Aperturmittelungseffekt. Typische gemessene PSI-Werte für mittlere Turbulenzstärken liegen bei 0,4 und solche für extreme Turbulenz um oder größer 1, jeweils für einen konventionellen Sender.

Die einfachste Methode, Fading aufgrund von atmosphärischer Turbulenz zu verringern, ist der Einsatz eines Empfangsteleskops (= Rx-Empfangsantenne) mit einem Durchmesser, der deutlich größer als die Specklemusterstrukturen ist; damit kommt es zum Effekt der sogenannten Aperturmittelung. Dabei gleichen sich die Hell-Dunkel-Schwankungen über der Empfängerfläche aus. Der Effekt ist um so besser, je größer die Antenne ist. Je nach Szenario können Flächen von $1m^2$ erforderlich sein. Bestimmte Turbulenzszenarien würden sogar aufgrund von zeitweise kompletten örtlichen Signaleinbrüchen über 10m Empfangsdurchmesser erfordern, was völlig unpraktikabel ist.

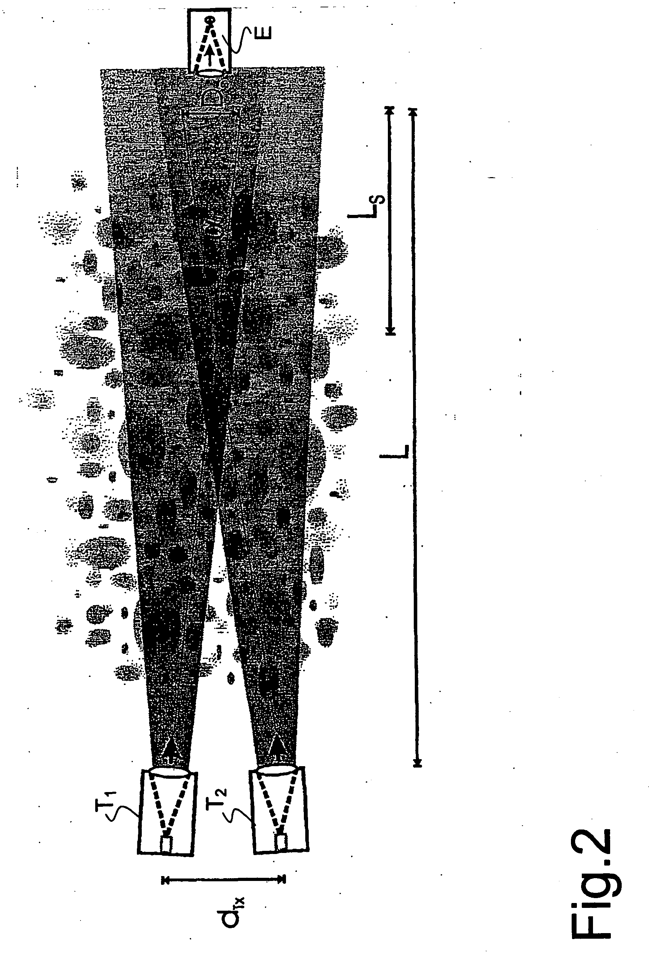

Eine weitere bekannte Methode zur Übertragungsverbesserung ist eine Sender-Ortsdiversität. Dabei strahlen mehrere seitlich versetzte Sendeantennen die gleichen Daten taktsynchron in Richtung eines Empfängers R (siehe Fig. 2). Damit wird erreicht, dass die beiden Sendestrahlen teils unterschiedliche Luftvolumina passieren. In einem Abschnitt mit einer Länge $L_s$ vor dem Empfänger R, in welchem sie zwangsweise das gleiche Volumen passieren, tun sie dies unter einem Winkel $\alpha$, der wiederum zum seitlichen Versatz der beiden - gegebenenfalls gleichen - Specklemuster führt; damit ist bei ausreichendem seitlichen Versatz wiederum ein statistischer Ausgleich der Specklemuster garantiert.

Fig.2 zeigt einen prinzipiellen Aufbau für eine solche Sender-Ortsdiversität. Hierbei ist in Fig.2 mit $d_{Tx}$ der seitliche Versatz zwischen zwei Sendern $T_1$ und $T_2$, mit L die Entfernung zwischen den beiden Sendern $T_1$ und $T_2$ und dem Empfänger R und mit $L_S$ der gemeinsame Muster bildende Turbulenzweg bezeichnet, welcher ausreicht, sowohl extreme Signaleinbrüche ("Fades") als auch extreme Leistungsüberhöhungen ("Surges") in dem Intensitätsmuster zu erzeugen. Die ausgezogene Linie in Fig.1 zeigt bei zwei Sendern den Signalverlauf, welcher bereits visuell eine geringere Varianz als das Signal bei nur einem Sender (siehe gestrichelter Signalverlauf in Fig.1) aufweist.

Nachteilig beim Stand der Technik ist folgendes:

Um eine Rx-Aperturabmessung deutlich größer als die Specklemuster zu erreichen, ist oft ein unpraktikabel großes Empfangs-Teleskop erforderlich, welches erheblich größer ist, als es für das mittlere Linkbudget (also bei ungestörter Übertragung) erforderlich wäre. Die hierfür erforderlichen Aperturen sind bei mobilem Einsatz - ganz abgesehen von unnötig hohem Gewicht, Volumen, und Kosten - unakzeptabel. In bestimmten Szenarien, wie beispielsweise mehrere Hundert km zwischen zwei hoch fliegenden aeronautischen Plattformen, (High Altitude Platforms, HAPs) werden die Muster sogar so groß, dass die Anwendung der Aperturmittelung völlig unmöglich wird. (Siehe D. Giggenbach, R. Purvinskis, M. Werner, M. Holzbock: "Stratospheric Optical Inter-Platform Links for High Altitude Platforms" AIAA, Proceedings of the 20th International Communications Satellite Systems Conference (ICSSC), Montreal, May 2002, 11 Stn.)

Mehrere seitlich versetzte Sendeantennen bedeuten einen großflächig verteilten Senderaufbau; dies ist für mobilen Einsatz, beispielsweise auf Flugzeugen, völlig unpraktikabel. Davon abgesehen ist mit einem verteilten Aufbau die Lageregelung für den Sender mehrfach erforderlich, was ebenfalls zu erhöhtem Volumen, Gewicht, und Kosten führt. Bei stratosphärischen HAPs-Szenarien wäre der erforderliche Abstand sogar größer als die entsprechenden Plattformen selbst.

Aus WO 01/06663 A2 ist ein Verfahren zum Verringern von blei optischer Freiraum-Kommunikation auf Grund von atmosphärischen Brechungsindex-Turbulenzen auftretendem Fading bekannt, bei dem sendeseitig mit gleichen Signalen modulierte Träger mindestens zweier unterschiedlicher Wellenlängen in einem Strahlengang kombiniert und gesendet werden und bei dem empfangsseitig die auf den verschiedenen Trägern übertragenen, ursprünglich gleichen Signale detektiert und ausgewertet werden.

Aufgabe der Erfindung ist es, ausgehend von einem Verfahren, wie es beispielsweise aus WO 01/06663 A2 bekannt ist, die durch atmosphärische Störungen beeinträchtigte Datenübertragung auf diesem Gebiet der Kommunikationstechnik zu verbessern und dabei eine optische Freiraum-Kommunikation zu ermöglichen, ohne dass zum Erfassen von Specklemustern unpraktikabel große Teleskope benötigt werden, und ohne dass ein großflächiger Senderaufbau erforderlich ist.

Gemäß der Erfindung, die sich auf ein Verfahren der eingangs genannten Art bezieht, wird diese Aufgabe dadurch gelöst, dass diese mit gleichen Signalen modulierten Träger mindestens zweier unterschiedlicher Wellenlängen synchron gesendet werden und dass bei der empfangsseitigen Detektion und Auswertung die Tatsache ausgenutzt wird, dass sich die Signale nach der Übertragung infolge unterschiedlicher Specklemuster unterscheiden, die sich auf Grund von sich auf die mindestens zwei unterschiedlichen Wellenlängen beziehenden Wellenlängendiversitäten ergeben, wobei die Detektion der Signale entweder mittels eines für alle verwendeten Wellenlängen gemeinsamen Photodetektors oder wellenlängenselektiv mittels mehrerer Photodetektoren und die Auswertung der detektierten Signale in einer nachgeordneten digitalen Empfängerelektronik vorgenommen wird.

Vorteilhafte Ausgestaltungen sind Gegenstand von Unteransprüchen.

Gemäß der Erfindung sind zwei Ansätze zur Vermeidung von starken Fadingeinbrüchen angegeben, die beide auf optischer Wellenlängendiversität basieren. Das erfindungsgemäße Verfahren wird hier lediglich beispielhaft nur für zwei Wellenlängen erläutert, dabei können aber unter entsprechendem technischen Mehraufwand ebenso gut mehr als zwei Wellenlängen zum Einsatz kommen, was dann bei richtiger Systemauslegung zu weiteren Übertragungsverbesserungen führt.

Die Sendequellen mit jeweils unterschiedlichen spektralen Wellenlängen (sinnvollerweise Laser, beispielsweise Laserdioden) werden dazu synchron (also mit den gleichen Informationen) moduliert. Im einfachen Intensitäts-Modulation/Direkt-Detektion-(IM/DD)-Fall werden sie also gleichzeitig auf volle Leistung gebracht (logische 1) oder ausgeschaltet (logische 0). Synchrone Phasen- oder Frequenzmodulation für Überlagerungs-Empfang (ÜE) ist ebenso denkbar.

Die beiden Ansätze zur Fadingreduktion sind dann folgende:

1) Das Sendesignal passiert abhängig von seiner Wellenlänge unterschiedliche turbulente Volumina und erzeugt daher unterschiedliche Specklemuster.

2) Beide Wellenlängen passieren das gleiche turbulente Luftvolumen, weisen aber unterschiedliche Specklemuster auf, da die Musterausbildung jeweils wellenlängenabhängig ist.

Beiden Methoden ist gemeinsam, dass sie umso besser wirken, je stärker die Turbulenzen und/oder je länger die Übertragungsstrecken sind. Ein Einsatz ist daher besonders für lange aeronautische Strecken - wie die Kommunikation zwischen hochfliegenden aeronautischen Kommunikationsplattformen, sogenannte HAPs - sinnvoll oder bei bodennaher, stark turbulenter Kommunikation. (Siehe die vorstehend angeführte Veröffentlichung von D. Giggenbach, F. David, et al.) Übliche FSO-(FreeSpace Optical Communications-)Wellenlängen (Laserwellenlängen, typisch im nahen Infrarot) sind beispielsweise 750nm, 800nm, 975nm 1064nm, 1300nm, 1550nm. Damit steht eine genügende Auswahl an verschiedenen Wellenlängen für die atmosphärische FSO-WLD-(WaveLength-Diversity-)Technik zur Verfügung; daneben gibt es besonders um 800nm und 1550nm ein großes Spektrum verfügbarer Lasertypen unterschiedlicher Wellenlänge.

Ein weiterer positiver Effekt besteht in der Erhöhung der Sendeleistung durch zusätzliche Laserdioden unterschiedlicher Wellenlängen. Dies ist insbesondere von Vorteil, da die Sendeleistungen der heute verfügbaren modulierbaren Laserdioden technisch bedingt auf etwa ein Watt (1W) beschränkt sind.

Es kann somit festgehalten werden, dass die Vorteile der Wellenlängendiversität darin bestehen, dass keine Vergrößerung der Terminals nur zum Zwecke der Fadingverringerung erforderlich ist. Gleichzeitig kann die mittlere Empfangsleistung mit jeder zusätzlichen Wellenlänge erhöht werden. Bei entsprechender Wellenlängenwahl ist darüber hinaus ein sehr einfacher Empfängeraufbau möglich und dies obendrein praktisch ohne jeden zusätzlichen Hardwareaufwand. Darüber hinaus kann durch die Nutzung zweier unterschiedlicher, nachstehend im einzelnen geschilderter Effekte die Diversität erhöht werden.

Nachfolgend wird die Erfindung anhand von Zeichnungen näher erläutert. Es zeigen:

Fig.1 Graphen von typischen gemessenen Empfangsleistungsschwankungen;

Fig.2 einen prinzipiellen Aufbau für eine Sender-Ortsdiversität;

Fig.3a und 3b Specklemuster für 532nm bzw. 1064nm bei identischem turbulenten Volumen;

Fig.4 eine schematische Darstellung von wellenlängenabhängigen Übertragungspfaden bei einem HAP-HAP-Szenario innerhalb der Stratosphäre;

Fig.5 eine schematische Darstellung von wellenlängenabhängigen Übertragungspfaden bei bodennaher Strecke;

Fig.6 einen prinzipiellen Aufbau eines Wellenlängendiversitäts-Senders;

Fig.7 einen prinzipiellen Aufbau eines Wellenlängendiversitäts-Empfängers in Form eines einfachen EGC-Empfängers, und

Fig.8 einen weiteren prinzipiellen Aufbau eines Wellenlängendiversitäts-Empfängers für Identitätsmodulation-Direktempfang (IM/DD).

Es gibt unterschiedliche Ausbreitungspfade für unterschiedliche Wellenlängen. Diesem Effekt liegt die Höhenschichtung des atmosphärischen Brechungsindex zugrunde; dieser nimmt mit der Höhe im Mittel in etwa exponentiell ab nach Gl.(1)

$$n(h) = 1 + n_{NN}'(\lambda) \cdot e^{-h/H} \qquad\qquad (1)$$

mit $n_{NN}'(\lambda)$=2,897.10$^{-4}$ + 2,165.10$^{-18}$m$^2$·$\lambda^{-2}$
(Differentieller Brechungsindex in Meereshöhe (NN))
H=7400m und h: Höhe über Meeresspiegel (NN)

Dieser Brechungsindex-Gradient hat zur Folge, dass alle innerhalb der Erdatmosphäre verlaufenden Lichtstrahlen zum Erdboden hin gebeugt werden und so eine gekrümmte Bahn verfolgen (Siehe M.E. Thomas, R.I. Joseph: "Astronomical Refration" Johns Hopkins Apl. Tec. Digest, Vol. 17, No. 3 (1996) S. 279 - 284). Nur für absolut vertikal zur Erdoberfläche verlaufende Stahlen geht dieser Effekt gegen Null. Die üblichen inner-atmosphärischen Übertragungspfade verlaufen aber horizontal oder schräg, womit das Eintreten dieses Effektes garantiert werden kann. Wie Gl.(1) entnommen werden kann, ist die Stärke des Effektes schwach, aber ausreichend abhängig von der Wellenlänge.

In der vorstehend angeführten Veröffentlichung ist als Beispiel eine Winkelabweichung von etwa 100$\mu$rad zwischen rot (ca. 650nm) und grün (ca. 500nm) beim Strahlpfad von oberhalb der Atmosphäre hinunter zur Erdoberfläche angegeben.

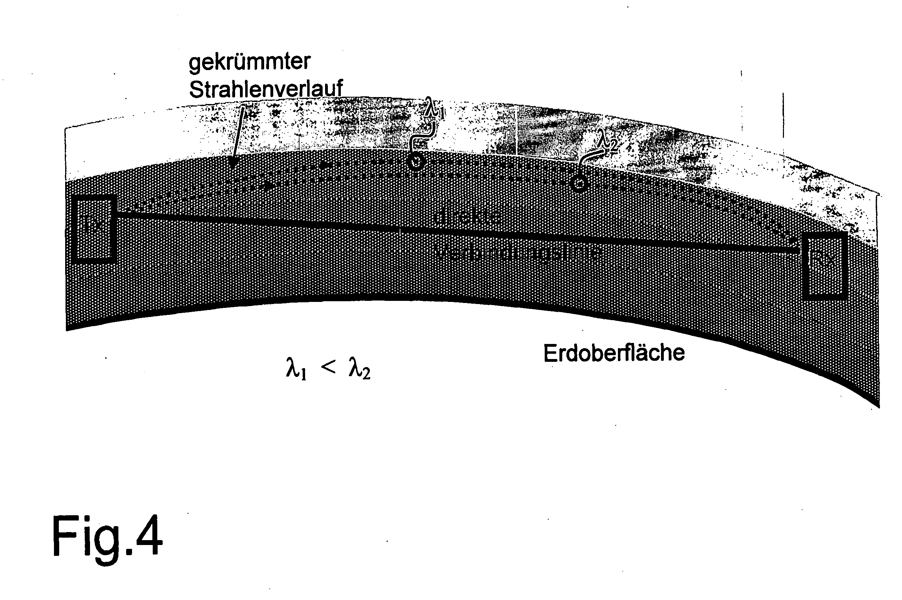

Bei der entsprechenden atmosphärischen Streckenlänge von ca. 20km ergibt dies eine seitliche Abweichung der beiden Pfade in der Streckenmitte von ca. 1,5m, dies reicht bereits für die Ausbildung unterschiedlicher Muster aus. Da inneratmosphärische Links (HAP-HAP) bedeutend länger sind (einige hundert km, wie z.B. in Fig.4), ist diese leichte Pfadabweichung völlig ausreichend, um unterschiedliche Specklemuster an der Empfängerposition hervorzurufen, insbesondere, da typische Empfangsaperturen nur ca. 20 bis 50cm Durchmesser haben.

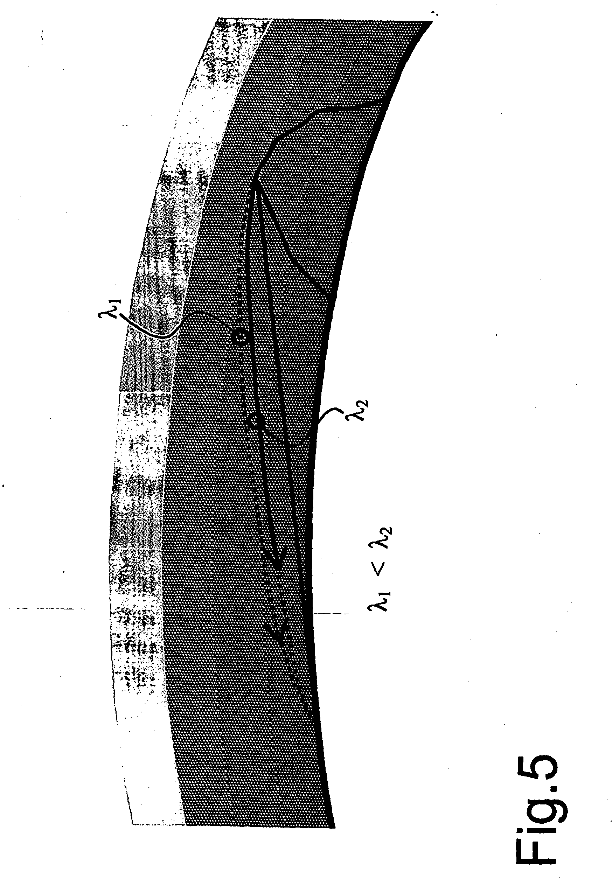

Fig.4 und 5 zeigen für verschiedene Szenarien für zwei Beispielwellenlängen $\lambda_1$, und $\lambda_2$ mit $\lambda_1 < \lambda_2$, dass es beim Aussenden eines Strahlenbündels eine ausgehende Richtung für $\lambda_2$ gibt, mit welcher der Strahl einen unter anderem Winkel von der Quelle ausgehenden $\lambda_1$-Strahl an der Position eines Empfängers Rx kreuzt. In Fig.4 sind wellenlängenabhängige Übertragungspfade bei einem HAP-HAP-Szenario wiedergegeben, wobei der gekrümmte Strahlenverlauf extrem überhöht dargestellt ist. In Fig.5 sind wellenlängenabhängige Übertragungspfade bei einer bodennahen Strecke, hier von einem Berg zu der vorgelagerten Ebene dargestellt, wobei der gekrümmte Strahlungsverlauf ebenfalls wieder extrem überhöht dargestellt ist. Hierbei symbolisieren sowohl in Fig.4 als auch in Fig.5 verschiedene Graustufen den nach oben schwächer werdenden atmosphärischen Brechungsindex.

Wenn das von einem Sender Tx ausgehende, beide Wellenlängen $\lambda_1$ und $\lambda_2$ enthaltende Strahlenbündel einen gewissen Divergenzwinkel nicht unterschreitet, muss nicht zusätzlich auf die Einhaltung bestimmter Abstrahlwinkel geachtet werden, sondern dann gibt es immer ein Paar von Strahlen, welches sich wie oben beschrieben verhält. Da damit garantiert ist, dass beide Strahlen unterschiedliches Volumen passieren, sind die beiden entstehenden Specklemuster beim Empfänger statistisch unabhängig. Damit ist eine ideale WellenlängenDiversität gewährleistet. Die weitere Verarbeitung der beiden Empfangssignale im Diversitätsempfänger wird weiter unten erläutert

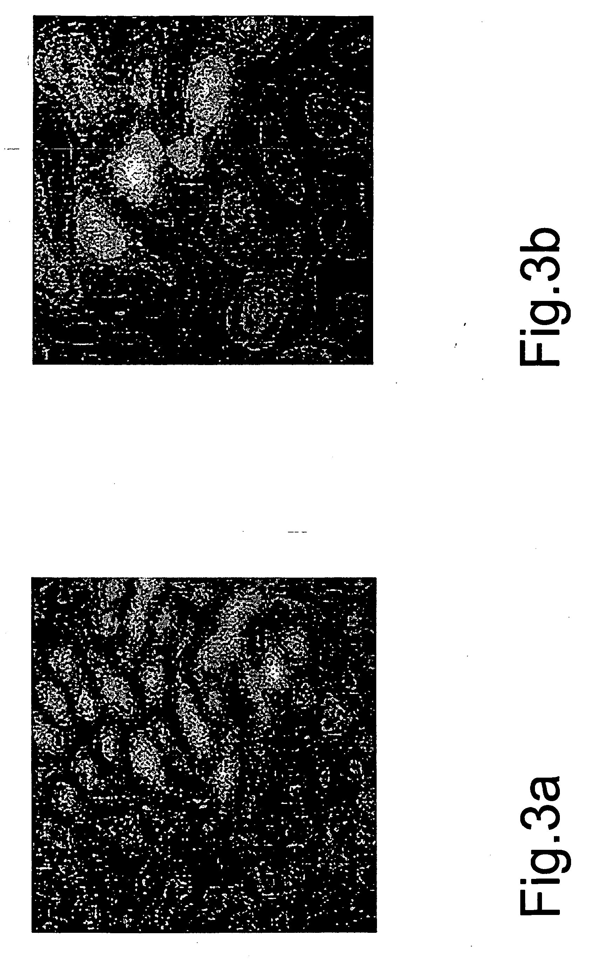

Die Ausbildung der Intensitäts-Specklemuster ist abhängig von der Wellenlänge. Dieser Effekt macht sich allerdings erst nach einer längeren Strecke bemerkbar. Dann ist der Unterschied allerdings gravierend, wie Fig.3a und 3b zeigen. Hierbei ist in Fig.3a ein Specklemuster für 523nm und in Fig.3b ein Specklemuster für 1064nm bei identischem turbulentem Volumen, basierend auf Feldmessungen dargestellt. Die Verteilung ist für die beiden Wellenlängen berechnet. Die Kantenlänge der dargestellten Bilder beträgt jeweils etwa 1m. Dies führt zu unterschiedlichen Empfangsleistungen der verschiedenen Wellenlängen, womit wiederum ein effektiver Diversitätsempfang gewährleistet ist.

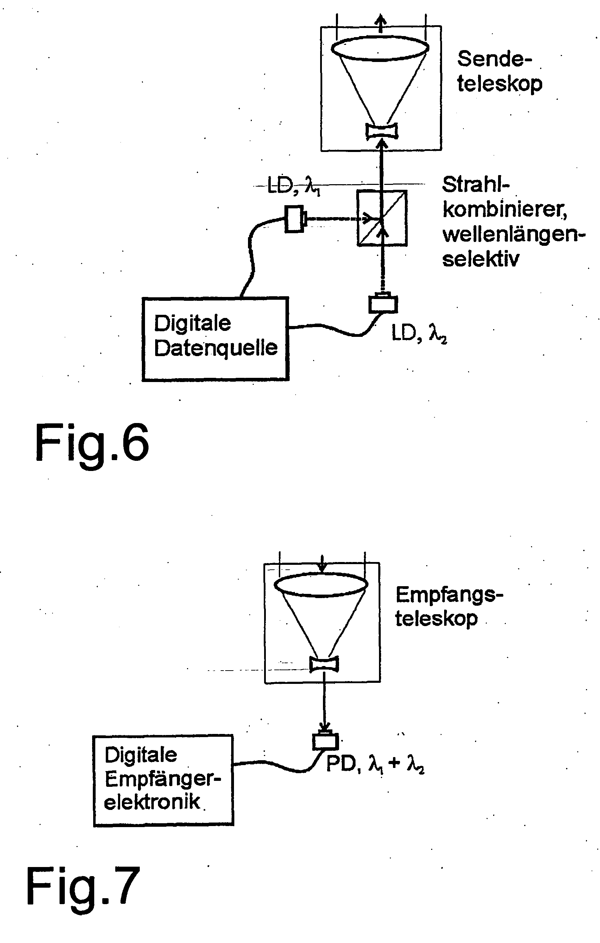

Wie Fig.6 zu entnehmen ist, müssen in einem Sender die - bereits mit der zu übertragenden Information modulierten - Träger verschiedener Wellenlänge, im Beispiel die Wellenlängen $\lambda_1$ und $\lambda_2$ zunächst im Strahlengang kombiniert werden, bevor sie ein Sendeteleskop passieren. Dies kann in faseroptischen Schmelzkopplern geschehen oder - falls die optischen Signale im Freistrahl vorliegen - über chromatische oder polarisierende Strahlteilerwürfel (oder entsprechenden anderen optischen Elementen). Hierbei muss unterschieden werden zwischen Intensitätsmodulation, welche eine einfachere Strahlkombination beispielsweise in Multimode-Faserkopplern ermöglicht, und kohärenter Modulation.

Dann werden die Signale durch das Sendeteleskop möglichst eng kollimiert, um eine möglichst hohe mittlere Empfangsleistung zu erzielen. Hierzu muss das Teleskop so ausgelegt sein, dass es auch alle beteiligten Wellenlängen optisch gleich abbildet. Hierzu sind entweder achromatische Linsen oder reflektive Optiken (Spiegelteleskope) erforderlich.

Bei einem Wellenlängendiversitäts-Empfänger muss wiederum bei der Optik auf gleiche Abbildungsleistung für alle zu empfangenden Wellenlängen geachtet werden (insbesondere für die Fokusposition); damit ist hier ebenfalls die Verwendung von reflektiver Optik der refraktiven Optik vorzuziehen.

Für Intensitäts-Modulation/Direktdetektion (IM/DD) gibt es prinzipiell drei verschiedene Detektionsprinzipien beim Diversitätsempfang.

a) Eine einfache Addition (Equal Gain Combining, EGC)(Fig.7) kann am einfachsten durch Detektion des gesamten Multi-Wellenlängen-Rx-Signals auf einem Photodetektor (PD) geschehen, dem eine digitale Empfängerelektronik nachgeordnet ist. Ein Nachteil besteht allerdings bei stark unterschiedlichen Wellenlängen in der auf nur kleine Wellenlängenbereiche begrenzten maximalen Responsivität der üblichen Photodioden. Allerdings sind strahlseparierende Elemente, wie beispielsweise chromatische Strahlteilerwürfel, nicht erforderlich.

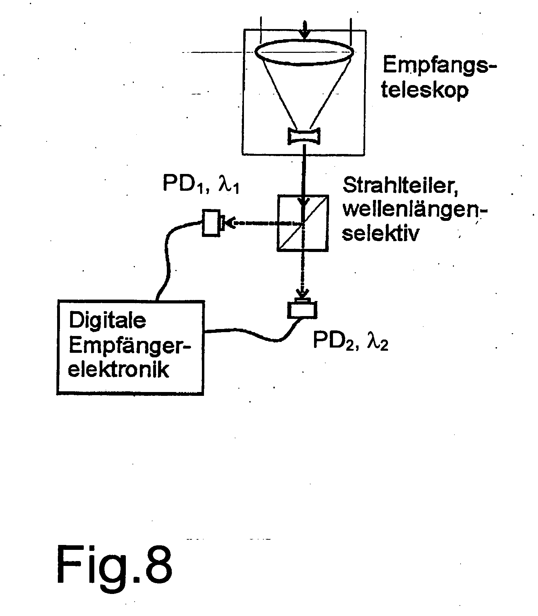

b) Bei einer Maximum-Likelihood-Selektion (MLS) werden die mittels eines Teleskops empfangenen Signale chromatisch mittels eines Strahlteilers wellenlängenselektiv aufgeteilt und einzeln in Photodioden $PD_1$ und $PD_2$ detektiert, wie in Fig.8 dargestellt. Daher kann anhand der jeweils gemessenen Empfangsleistung das stärkste Signal erkannt - und nur dessen Informationsgehalt ausgewertet werden. Damit ist ein einfaches Verfahren angegeben, welches unter bestimmten Voraussetzungen bessere Ergebnisse als EGC liefern kann.

c) Bei einer signalabhängigen Verstärkung (Maximum-Gain-Combining, MGC) werden entsprechend der schematischen Darstellung in Fig.8, die verschiedenen Wellenlängen wieder getrennt detektiert und die elektrischen Signale linear bezüglich des stärksten Signals verstärkt; schließlich werden alle so vorverarbeiteten elektrischen Signale aufsummiert. Dieses Verfahren liefert das beste Gesamt-SNR, erfordert aber entsprechend mehr Aufwand als beispielsweise EGC.

Im Gegensatz zur einfachen Direkt-Detektion (DD) ist beim Überlagerungs-Empfang (ÜE) ein lokaler Oszillator erforderlich, dessen Oszillationsfrequenz der Frequenz des Empfangssignals nachgeführt werden muss; daher ist eine automatische Frequenzkontrolle (AFC) erforderlich. Da die Trennung verschiedener Überlagerungssignale auf einem gemeinsamen Detektor kaum gelingen kann, scheint dieser Weg momentan nicht praktikabel. Eine chromatische Trennung der einzelnen Wellenlängen im Empfangsteleskop und nachgeordneten getrennten Überlagerungsempfänger mit ebenfalls separater Frequenzregelung erscheinen hier der gangbare Weg

Damit kommen bis jetzt nur für Überlagerungsempfang (ÜE) die vorstehend unter b) und c) vorgestellten Verfahren in Frage.

Die prinzipiellen Eigenschaften von Wellenlängen-Diversitäts-(Wave-Length-Diversity, WLD)-Terminals sind folgende:

- Die Optiken müssen für die beteiligten Wellenlängen achromatisch sein, d.h. Brennweiten bzw. Fokuspositionen müssen unabhängig von der Wellenlänge gleich sein.
- Mit der Anzahl der eingesetzten Wellenlängen lässt sich die Diversitätswirkung steigern, im Extremfall bis hin zum fadingfreien Empfang.
- Verschiedene Diversitätsempfangs-Techniken können angewandt werden, womit Empfängerkomplexität und Übertragungsqualität zueinander skaliert werden können.

- Die Technik wirkt umso vorteilhafter im Vergleich zum konventionellen Empfang, je stärker die Turbulenzen sind.

## Patentansprüche

1. Verfahren zum Verringern von bei optischer Freiraum-Kommunikation auf Grund von atmosphärischen Brechungsindex-Turbulenzen auftretendem Fading, wobei sendeseitig mit gleichen Signalen modulierte Träger mindestens zweier unterschiedlicher Wellenlängen in einem Strahlengang kombiniert und gesendet werden und empfangsseitig die auf den verschiedenen Trägern übertragenen, ursprünglich gleiche Signale detektiert und ausgewertet werden, **dadurch gekennzeichnet, dass** diese mit gleichen Signalen modulierten Träger mindestens zweier unterschiedlicher Wellenlängen ($\lambda_1$, $\lambda_2$) synchron gesendet werden und dass bei der empfangsseitigen Detektion und Auswertung die Tatsache ausgenutzt wird, dass sich die Signale nach der Übertragung infolge unterschiedlicher Specklemuster unterscheiden, die sich auf Grund von sich auf die mindestens zwei unterschiedlichen Wellenlängen beziehenden Wellenlängendiversitäten ergeben, wobei die Detektion der Signale entweder mittels eines für alle verwendeten Wellenlängen gemeinsamen Photodetektors (PD) oder wellenlängenselektiv mittels mehrerer Photodetektoren (PD$_1$, PD$_2$) und die Auswertung der detektierten Signale in einer nachgeordneten digitalen Empfängerelektronik vorgenommen wird.

2. Verfahren nach Anspruch 1, **dadurch gekennzeichnet, dass** die mit gleichen Signalen modulierten Träger mindestens zweier unterschiedlicher Wellenlängen ($\lambda_1$, $\lambda_2$) mittels eines Strahlkombiniexers, der durch einen faseroptischen Schmelzkoppler oder bei im Freistrahl vorliegenden optischen Signalen über einen chromatischen oder polarisierenden Strahlteilerwürfel realisierbar ist, kombiniert und nach einer möglichst engen Kollimierung in einer Kollimator-Linsenanordnung über ein Sendeteleskop abgegeben werden und dass die zur Detektion und Auswertung mittels eines Empfangsteleskops empfangenen Multi-Wellenlängen-Signale in einem für alle verwendeten Wellenlängen gemeinsamen Photodetektor (PD) addiert und in der diesem nachgeordneten digitalen Empfängerelektronik ausgewertet werden.

3. Verfahren nach Anspruch 1, **dadurch gekennzeichnet, dass** die mit gleichen Signalen modulierten Träger mindestens zweier unterschiedlicher Wellenlängen ($\lambda_1$, $\lambda_2$) mittels eines Strahlkombinierers, der durch einen faseroptischen Schmelzkoppler oder bei im Freistrahl vorliegenden optischen Signallen über einen chromatischen oder polarisierenden Strahlteilerwürfel realisierbar ist, kombiniert und nach einer möglichst engen Kollimierung in einer Kollimator-Linsenanordnung über ein Sendeteleskop abgegeben werden und dass die zur Detektion und Auswertung mittels eines Empfangsteleskops empfangenen Multi-Mellenlangen-Signale in einem wellenlängenselektiven Strahlteiler chromatisch aufgeteilt werden und in einer entsprechenden digitalen Elektronik aus den einzelnen, in verschiedenen Photodetektoren (PD$_1$, PD$_2$) detektierten Signalen anhand der jeweils gemessenen Empfangsleistung das stärkste Signal erkannt und ausgewählt und nur dessen Inhalt ausgewertet wird.

4. Verfahren nach Anspruch 1, **dadurch gekennzeichnet, dass** die mit gleichen Signalen modulierten Träger mindestens zweier unterschiedlicher Wellenlängen ($\lambda_1$, $\lambda_2$) mittels eines Strahlkombinierers, der durch einen faseroptischen Schmelzkoppler oder bei im Freistrahl vorliegenden optischen Signalen über einen chromatischen oder polarisierenden Strahlteilerwürfel realisierbar ist, kombiniert und nach einer möglichst engen Kollimierung in einer Kollimator-Linsenanordnung über ein Sendeteleskop abgegeben werden und dass die zur Detektion und Auswertung mittels eines Empfangsteleskops empfangenen Multi-Wellenlängen-Signale in einem wellenlängenselektiven Strahlteiler chromatisch aufgeteilt und die einzelnen, in verschiedenen Photodetektoren (PD$_1$, PD$_2$) detektieren elektrischen Signale zur Auswertung linear bezüglich des stärksten Signals verstärkt und alle so vorverarbeiteten elektrischen Signale elektronisch aufsummiert werden.

## Claims

1. A method for reducing fading arising in optical free space communication due to atmospheric refractive index turbulences, wherein, on the transmitting side, carriers of at least two different wavelengths and modulated with the same signals are combined in a beam path and transmitted, and wherein, on the receiving side, the originally same signals communicated on the different carriers are detected and evaluated, **characterized in that** these carriers of at least two different wavelengths ($\lambda_1$, $\lambda_2$) and modulated with the same signals are transmitted synchronously, and that the detection and evaluation on the receiving side utilizes the fact that, after transmission, the signals differ due to different speckle patterns that result from wavelength diversities relating to the at least two different wavelengths, the detection of the signals being effected either by means of a photo-detector (PD) common to all wavelengths used or, in a wavelength-selective manner, by means of a plurality of photo-detectors ($PD_1$, $PD_2$), and the evaluation of the signals being effected in downstream digital receiving electronics.

**2.** The method of claim 1, **characterized in that**, using a beam combiner which may be realized by a fibre optical fused fibre coupler or, in the case of optical signals present in a free beam, by a chromatic or polarizing beam splitter cube, the carriers of at least two different wavelengths ($\lambda_1$, $\lambda_2$) and modulated with the same signals are combined and, after as narrow as possible a collimation in a collimator lens arrangement, are emitted via a transmitting telescope, and that the multi-wavelength signals received by a receiving telescope for detection and evaluation are added in a photo-detector (PD) common to all wavelengths used, and are evaluated in digital receiving electronics arranged downstream of the photo-detector.

**3.** The method of claim 1, **characterized in that**, using a beam combiner which may be realized by a fibre optical fused fibre coupler or, in the case of optical signals present in a free beam, by a chromatic or polarizing beam splitter cube, the carriers of at least two different wavelengths ($\lambda_1$, $\lambda_2$) and modulated with the same signals are combined and, after as narrow as possible a collimation in a collimator lens arrangement, are emitted via a transmitting telescope, and that the multi-wavelength signals received by a receiving telescope for detection and evaluation are split chromatically in a wavelength-selective beam splitter and, in corresponding digital electronics, the strongest signal among the individual signals detected in different photo-detectors ($PD_1$, $PD_2$) is detected and selected using the respective measured receiving performance, only the content of this signal being evaluated.

**4.** The method of claim 1, **characterized in that**, using a beam combiner which may be realized by a fibre optical fused fibre coupler or, in the case of optical signals present in a free beam, by a chromatic or polarizing beam splitter cube, the carriers of at least two different wavelengths ($\lambda_1$, $\lambda_2$) and modulated with the same signals are combined and, after as narrow as possible a collimation in a collimator lens arrangement, are emitted via a transmitting telescope, and that the multi-wavelength signals received by a receiving telescope for detection and evaluation are split chromatically in a wavelength-selective beam splitter and that, for evaluation, the individual electrical signals detected in different photo-detectors ($PD_1$, $PD_2$) are linearly amplified with respect to the strongest signal and all thus pre-processed electrical signals are electronically summed up.

**Revendications**

**1.** Procédé de réduction de l'évanouissement apparaissant lors d'une communication optique en espace libre en raison de turbulences atmosphériques liées à l'indice de réfraction, dans lequel, du côté émetteur, des porteuses, modulées avec des signaux identiques, d'au moins deux longueurs d'onde différentes sont combinées et envoyées dans une trajectoire du faisceau et que, du côté récepteur, les signaux à l'origine identiques, transmis sur les différentes porteuses, sont détectés et évalués, **caractérisé en ce que** ces porteuses, modulées avec des signaux identiques, d'au moins deux longueurs d'onde différentes ($\lambda 1$, $\lambda 2$) sont émises de manière synchrone et **en ce que**, lors de la détection et l'évaluation du côté récepteur, on tire profit du fait que les signaux se différencient après la transmission en conséquence de différents motifs de tavelures qui résultent de diversités de longueurs d'onde se rapportant aux au moins deux longueurs d'onde différentes, la détection des signaux étant réalisée soit au moyen d'un photodétecteur commun (PD) pour toutes les longueurs d'onde employées, soit par sélection des longueurs d'onde au moyen de plusieurs photodétecteurs (PD1, PD2) et l'évaluation des signaux détectés étant réalisée dans un récepteur électronique numérique placé en aval.

**2.** Procédé selon la revendication 1, **caractérisé en ce que** les porteuses, modulées avec des signaux identiques, d'au moins deux longueurs d'onde différentes ($\lambda 1$, $\lambda 2$) sont combinées au moyen d'un dispositif de combinaison de faisceau, qui peut être réalisé par un coupleur à émail et fibre optique ou par un dé-séparateur de faisceau chromatique ou polarisant en cas de signaux optiques présents dans le faisceau libre, et après une collimation la plus étroite possible dans un dispositif de lentilles de collimateur sont émises par le biais d'un télescope d'émission et **en ce que** les signaux de plusieurs longueurs d'onde reçus à des fins de détection et d'évaluation au moyen d'un télescope de réception sont additionnés dans un photodétecteur commun (PD) pour toutes les longueurs d'onde employées et évalués dans le récepteur électronique numérique placé en aval de celui-ci.

**3.** Procédé selon la revendication 1, **caractérisé en ce que** les porteuses, modulées avec des signaux identiques, d'au moins deux longueurs d'onde différentes ($\lambda 1$, $\lambda 2$) sont combinées au moyen d'un dispositif de combinaison de faisceau, qui peut être réalisé par un coupleur à émail et fibre optique ou par un dé-séparateur de faisceau chromatique ou polarisant en cas de signaux optiques présents dans le faisceau libre, et après une collimation la plus étroite possible dans un dispositif de lentilles de collimateur sont émises par le biais d'un télescope d'émission et **en ce que** les signaux de plusieurs longueurs d'onde reçus au moyen d'un télescope de réception à des fins de détection et d'évaluation sont séparés chromatiquement dans un séparateur de faisceau avec sélection des longueurs d'onde et, dans un système électronique numérique correspondant le signal le plus puissant est discerné et sélectionné à partir des signaux séparés détectés dans différents photodétecteurs (PD1, PD2) à l'aide de la puissance de réception mesurée pour chacun, et seulement son contenu est évalué.

4. Procédé selon la revendication 1, **caractérisé en ce que** les porteuses, modulées avec des signaux identiques, d'au moins deux longueurs d'onde différentes ($\lambda$1, $\lambda$2) sont combinées au moyen d'un dispositif de combinaison de faisceau, qui peut être réalisé par un coupleur à émail et fibre optique ou par un dé-séparateur de faisceau chromatique ou polarisant en cas de signaux optiques présents dans le faisceau libre, et après une collimation la plus étroite possible dans un dispositif de lentilles de collimateur sont émises par le biais d'un télescope d'émission et **en ce que** les signaux de plusieurs longueurs d'onde reçus au moyen d'un télescope de réception à des fins de détection et d'évaluation sont séparés chromatiquement dans un séparateur de faisceau avec sélection des longueurs d'onde et les signaux électriques séparés détectés dans différents photodétecteurs (PD1, PD2) sont amplifiés de manière linéaire par rapport au signal le plus puissant à des fins d'évaluation et tous les signaux électriques ainsi prétraités sont additionnés de manière électronique.

Fig.1

9

Fig.2

Fig.3b

Fig.3a

gekrümmter
Strahlenverlauf

Erdoberfläche

$\lambda_1 < \lambda_2$

Fig.4

Fig.5

$\lambda_1$

$\lambda_2$

$\lambda_1 < \lambda_2$

EP 1 411 652 B1

Sendeteleskop

LD, $\lambda_1$

Strahlkombinierer,
wellenlängenselektiv

Digitale
Datenquelle

LD, $\lambda_2$

# Fig.6

Empfangsteleskop

Digitale
Empfängerelektronik

PD, $\lambda_1 + \lambda_2$

# Fig.7

Empfangsteleskop

PD$_1$, λ$_1$

Strahlteiler,
wellenlängenselektiv

Digitale
Empfängerelektronik

PD$_2$, λ$_2$

Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0106663 A2

**In der Beschreibung aufgeführte Nicht-Patentliteratur**

- **D. GIGGENBACH ; F. DAVID et al.** Measurements at a 61 km near-ground optical transmission channel. *Proceedings of SPIE,* 2002, vol. 4635, 9
- **D. GIGGENBACH ; R. PURVINSKIS ; M. WERNER ; M. HOLZBOCK.** Stratospheric Optical Inter-Platform Links for High Altitude Platforms. *AIAA, Proceedings of the 20th International Communications Satellite Systems Conference (ICSSC,* Mai 2002, 11
- **M.E. THOMAS ; R.I. JOSEPH.** Astronomical Refraction. *Johns Hopkins Apl. Tec. Digest,* 1996, vol. 17 (3), 279-284